Europäisches Patentamt

(19) European Patent Office

Office européen des brevets

(11) Publication number: **0 082 223**
**A1**

(12) **EUROPEAN PATENT APPLICATION**

(21) Application number: **81305971.4**

(22) Date of filing: **21.12.81**

(51) Int. Cl.³: **F 16 L 1/02**

(43) Date of publication of application:
29.06.83 Bulletin 83/26

(84) Designated Contracting States:
AT BE CH DE FR IT LI LU NL SE

(71) Applicant: Demco Limited
Lindley Grange Watling Street
Nuneaton Warwickshire(GB)

(72) Inventor: Howley, John Anthony
c/o Demco Limited Lindley Grange Watling Street
Nuneaton Warwickshire(GB)

(74) Representative: Cowan, David Robert et al,
WALFORD AND HARDMAN BROWN Trinity House Hales
Street
Coventry CV1 1NP West Midlands(GB)

(54) **Lining underground conduits.**

(57) The invention relates to the lining of underground conduits and, in particular, to the relining of damaged sewer conduits.

The conduit is lined by the use of lengths of pipe (20) which are such that they can be located across the conventional vertical access opening (13) to the conduit. Successive lengths of pipe are interconnected by screw-threaded engagement and are drawn along the conduit by a traction cable (22). Connection of the pipe lengths takes place in the base of the access opening.

The pipe lengths are of rigid plastics and when connected present smooth internal and external surfaces.

FIG 3

EP 0 082 223 A1

## LINING UNDERGROUND CONDUITS

This invention relates to the lining of underground conduits and in particular to a method of lining conduits which extend generally horizontally using generally vertical excavations at spaced locations along the conduit.

A particular application of the invention is in relining underground sewer conduits. Such conduits can become damaged and to repair the damaged conduit it is necessary to make excavations to the conduit to effect repairs. Since such excavations are expensive to make and very inconvenient to road users where the conduit passes under roads, there is a clear need for a method of repair which enables repairs to be effected without making excavations additional to the access openings already present.

An object of the invention is to provide a method and apparatus for lining underground conduits which enables the work to be done effectively and with the least expense.

According to the invention a method of lining generally horizontal underground conduit comprises gaining access to the conduit through generally vertical openings and inserting lengths of non-metallic pipe into the conduit, the lengths of pipe being connected together by screw-threaded engagement with one another, the connection of successive lengths of pipe being made towards the base of a vertical opening so that each length of pipe is connected to a length of pipe already positioned in the conduit.

Preferably the connected lengths of pipe are drawn through the conduit by means connected to one end of the length of pipe in the conduit which means extends to a further vertical opening so that the pipe is drawn towards the further opening to eventually extend between the two openings. Conveniently such means is a cable connected to winch or other means for applying traction to the cable.

Preferably the lengths of pipe used in the method of the invention are formed of plastics material and each length has screw-threaded male and female portions at opposite ends for direct connection to one another. Conveniently the pipe lengths are formed so that the connected lengths of pipe have generally smooth, uninterrupted inner and outer surfaces.

As a final step in the installation of the pipe lengths the space between the conduit and the pipe is sealed at each end and, optionally, grouting material is injected between the outer wall of the pipe and the wall of the conduit throughout the length of pipe.

Further features of the invention will appear from the following description of an embodiment of the invention given by way of example only and with reference to the drawings, in which:-

Fig. 1 is a side sectional elevation of a first stage of the lining of a sewer conduit,

Fig. 2 is a view corresponding to Fig. 1 of a second stage,

Fig. 3 is a view corresponding to Figs. 1 and 2 of a third stage,

Fig. 4 is a sectional elevation of one end of a length of pipe after installation.

Fig. 5 is an end view of the pipe of Fig. 4, and

Fig. 6 is a sectional view of lengths of pipe suitable for the method of the invention.

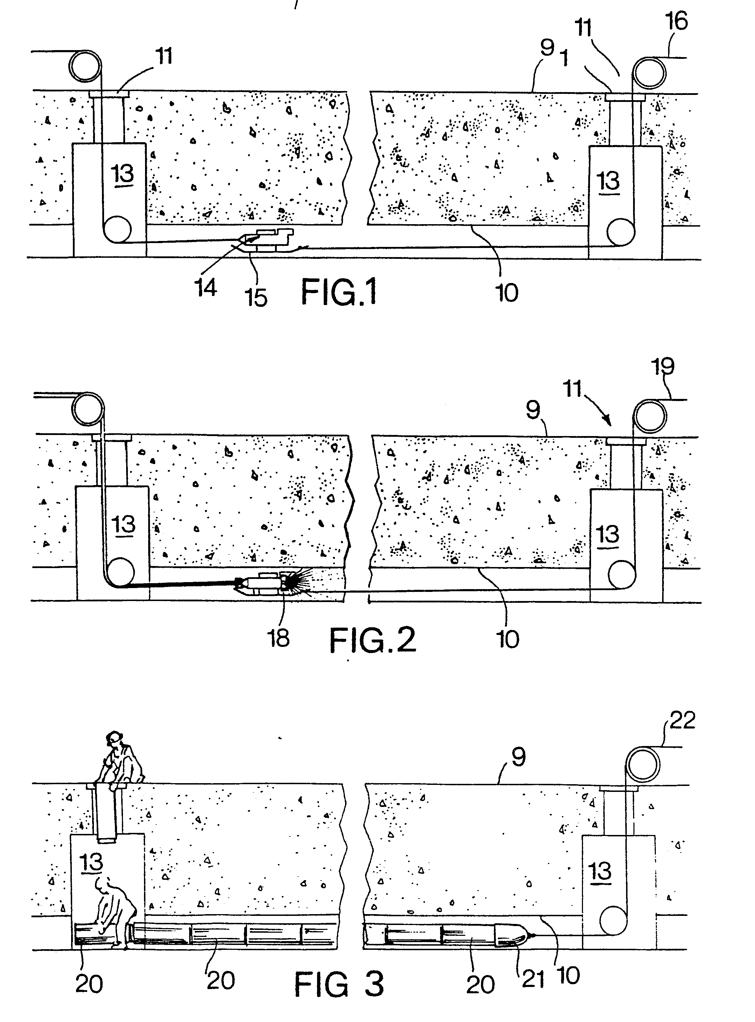

The drawings show the use of the invention in relining an existing sewer conduit which has become damaged and requires repair. As shown in Figs. 1-3 a sewer conduit 10 extends generally horizontally beneath the ground surface 9, for example a road, and access is obtainable to the conduit through the conventional access openings 11 which are spaced along the conduit and which each consist of a manhole 12 leading into a chamber 13, the conduit opening into the chamber 13 towards the base thereof.

Referring to Fig. 1 the conduit 10 to be repaired is surveyed to ascertain its condition by drawing a camera 14 along the conduit between successive openings 11. The camera is mounted on a sledge 15 and is drawn along by a cable 16.

In a second stage shown in Fig. 2 the conduit 10 is cleaned out, as may be necessary, by a cleaning unit 18 incorporating water jets. As before the unit 18 is drawn along by a cable 19.

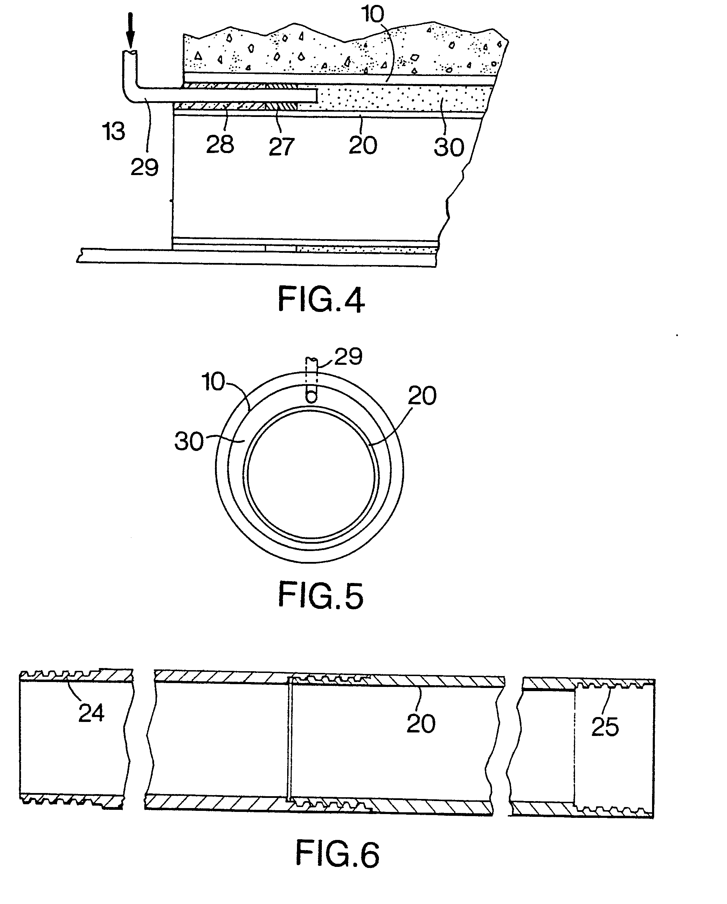

After the conduit has been made ready to be relined a length of pipe 20, such as shown in Fig. 6, is lowered through the opening 11 and attached to a tapered nose 21 which is attached to one end of a cable 22. The cable 22 is in turn attached to a winch (not shown).

0082223

After the initial length of pipe 20 is introduced into the end of the conduit a further length of pipe 20 is lowered into the opening 11, lined up with the pipe in the conduit and then connected thereto.

As seen in Fig. 5 the lengths of pipe are formed with male and female screw threads 24 and 25 at opposite ends so that each length of pipe can be readily connected to another length by rotating the fresh length of pipe.

Successive lengths of pipe are connected together by this action, the connected lengths being drawn along the conduit by the cable 22 after each new length 20 is added. It will be seen that the pipe lengths 20 are each of a length such that they can be accommodated in the base of the opening 11 in a generally horizontal position.

The pipes 20 are formed of non-metallic material, preferably plastics of the polyolefin type being non-corrodible and having some resilience to conform to a conduit which may not be rectilinear. The material is rigid and strong enough to withstand pressures arising from underground burial and to withstand the forces arising from the pulling of the pipe through the conduit.

Referring now to Figs. 4 and 5, after the pipe has been installed in the conduit the ends of the pipe emerging into the chambers are sealed to the walls of the conduit. For this purpose a sealing ring 27 is located between the outside of the pipe and the walls of the conduit and sealing material 28 is inserted between the sealing ring and the end of the pipe. A tube 29 is located through the seal and grouting material 30 may then be injected through the tube 29 to surround the length of the pipe and provide a secure support for the pipe throughout its length.

It will be seen that the lengths of pipe can be joined together and inserted using the exising access openings for the sewer conduit without any additional excavation being necessary.   The relatively short lengths of pipe are readily lined up and connected in the space available. Accordingly damaged sewers can be relined at a fraction of the cost of laying new conduit.

The method of the invention is not limited to relining sewers but can also find application in lining or relining other underground conduits, for excample cable conduits.

**0082223**

CLAIMS

1.  A method of lining buried conduits characterised by gaining access to the conduit (10) through generally vertical openings (13) and inserting lengths of cylindrical pipe (20) into the conduit, the lengths of pipe (20) being interconnected by screw-threaded engagement and the connection of successive lengths of pipe being made in said vertical openings (13) so that each successive length of pipe is connected to a length of pipe already positioned in the conduit.

2.  A method according to claim 1 characterised in that the lengths of pipe (20) are drawn along the conduit (10) by traction means (22) connected to one end (21) of interconnected lengths of pipe (20) in the conduit.

3.  A method according to claim 2 characterised in that the lengths of pipe (20) are drawn from one vertical opening (13) towards another vertical opening (13) by said traction means (22), the traction means being located at said other vertical opening and including a cable connectable to said one end (21) of the pipe.

4.  A method according to any one of the preceding claims characterised in that the lengths of pipe (20) are dimensioned in their longitudinal direction to be locatable lengthwise across the vertical openings (13) during installation.

5.  A method according to any one of the preceding claims characterised in that the lengths of pipe (20) are non-metallic and each length includes screw-threaded male and female portions (24, 25) at opposite ends for the lengths to be sealingly connected to one another.

6. A method according to claim 5 characterised in that the ends of the lengths of pipe (20) are so formed that the interconnected lengths of pipe present contiguous cylindrical inner and outer surfaces.

7. A method according to claim 5 or 6 characterised in that the thread form (24, 25) of the screw-threaded portions is rectangular in cross-section.

8. A method according to any one of the preceding claims characterised in that the space (30) between the exterior of the pipe (20) and the conduit walls (10) is sealed.

9. A method according to claim 8 characterised in that the space (30) between the pipe (20) and the conduit (10) is injected with grouting material.

10. Pipe lengths for use in the method of any one of claims 1-9 characterised by lengths of plastics pipe (20) each with male and female screw-threaded ends (24, 25) and, when connected together, presenting smooth, uninterrupted inner and outer surfaces, the lengths of pipe (20) being dimensioned to be locatable lengthwise across access openings (13) to buried sewer conduit (10).

1/2

0082223

FIG.1

FIG.2

FIG 3

10

13  29  28  27  20  30

FIG.4

29

10  20

30

FIG.5

24  20  25

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 573 710 (BADISCHE ANILIN- & SODA-FABRIK) *Page 4, line 33 to page 5, line 33; figures 1-3* | 1-4,6, 8,9 | F 16 L 1/02 F 16 L 55/16 |
| A | GB-A- 243 574 (J.FOWLER AND COMPANY) *Figures 3-7* | 1 | |
| A | US-A-2 258 066 (E.OYEN) *Figure 1* | 7,10 | |
| A | DE-A-2 704 438 (BENNETT et al.) | | |
| A | US-A-3 119 599 (W.I.TATTLE) | | |

TECHNICAL FIELDS SEARCHED (Int. Cl. ³)

F 16 L

The present search report has been drawn up for all claims

| Place of search THE HAGUE | Date of completion of the search 24-03-1983 | Examiner ANGIUS P. |
|---|---|---|